# EUROPEAN PATENT SPECIFICATION

(11) **EP 4 477 627 B1**
(45) Date of publication and mention of the grant of the patent: **17.09.2025**
(21) Application number: 24181887.1
(22) Date of filing: 13.06.2024
(51) Int. Cl.: C03B 23/055, C03B 23/09, C03B 23/045

(54) **GLASS TUBE FORMING DEVICE IN A FORMING MACHINE OF GLASS CONTAINERS FOR MEDICAL USE**
VORRICHTUNG ZUM FORMEN VON GLASROHREN IN EINER MASCHINE ZUM FORMEN VON GLASBEHÄLTERN FÜR MEDIZINISCHE ZWECKE
DISPOSITIF DE FORMATION DE TUBE EN VERRE DANS UNE MACHINE DE FORMATION DE RÉCIPIENTS EN VERRE À USAGE MÉDICAL

(30) Priority: 16.06.2023 IT 202300012465
(43) Date of publication of application: 18.12.2024
(73) Proprietor: Euromatic S.r.l., 24047 Treviglio (BG) (IT)
(72) Inventor: GUSMINI, Giorgio, IT- 24047 TREVIGLIO (BG) (IT)
(74) Representative: Dragotti & Associati S.R.L.

(56) References cited:
- EP-A2- 1 369 390
- DE-A1- 102017 115 397
- US-A- 5 788 733

## Description

The present invention relates to a glass tube forming device adapted to be used in a forming machine of glass containers for medical use.

Such a forming device is used in the mass production of glass containers obtained from a glass tube for medical use (vials, bottles, cartridges and syringes). The forming device is used to give the desired shape or form to the hollow cylindrical glass tube which must with its action be transformed into a container such as a vial, a bottle, a cartridge, a syringe, etc. More precisely, several forming devices are used which cooperate in succession within special forming machines, such as that shown in EP1369390 of the same applicant, to form the glass container from the glass tube.

The forming device, in view of the increasingly stringent quality requirements of the end product, must intervene with extreme precision on the individual heated glass tube which is brought into the vicinity thereof. Its intervention must also not result in the slightest deterioration or marking of the glass tube. More specifically, the heated glass tube or minimal parts thereof must absolutely not attach to the forming roller of the forming device. Currently, each forming station of a forming machine is provided with a known forming device, which can be summarised as being composed as follows.

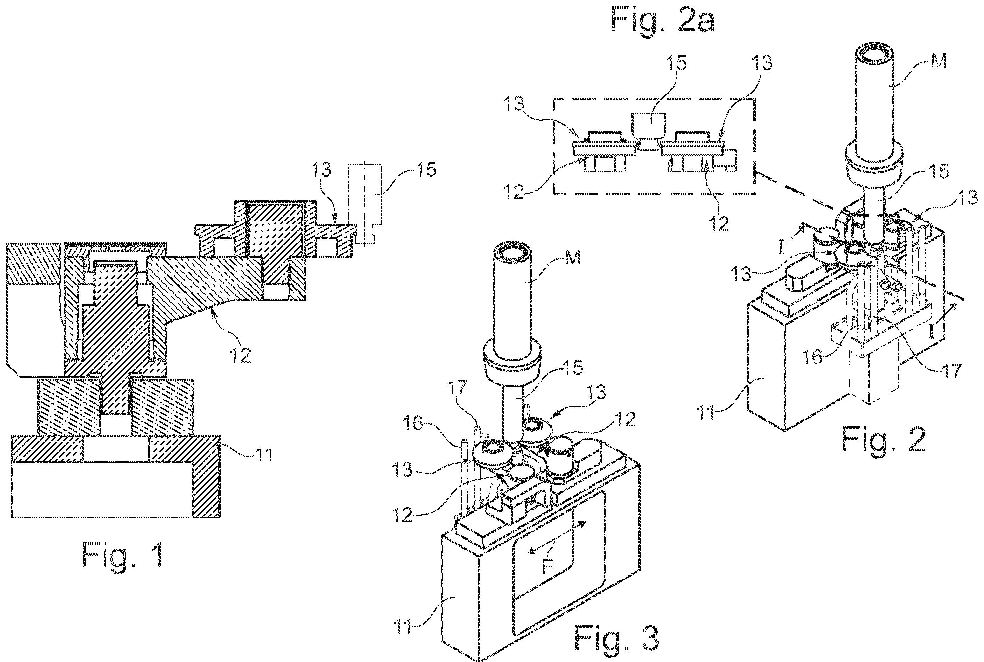

Such a known forming device 10, as for example shown in figures 1 to 3, comprises a parallelepiped base block 11 supporting a pair of arms 12. Such arms 12 are L-shaped arms, are arranged in the upper part of the base block 11 and each support a flat roller or deforming disc 13 of tool steel from below, which is arranged above the free end of the arm 12. The deforming disc 13 is arranged idle on a shaft 14 which connects it to the L-shaped arm.

Furthermore, the two arms 12 bearing the deforming discs 13 can be moved towards and away from each other according to the arrow F to engage and disengage, respectively, from a glass tube 15 to be shaped. The glass tube 15 is carried by a mandrel (diagrammatically shown in M) which is placed above the forming device. Therefore, inside the base block 12 of the device there are the movements which allow to move these deforming discs 13, which deform the glass tube 15 which is previously heated by the other stations of the forming machine, deforming discs which thereby shape the glass tube, viz., give the shape to the glass tube itself according to the design or shape of the glass container which is required, e.g., a bottle, but also a cartridge or a syringe, etc.

As partly anticipated, in order for the device to function properly, it is necessary to allow the deforming disc 13 to be lubricated, viz., a film of oil is created on the individual deforming disc 13 so as to prevent the glass from attaching to the deforming disc itself and being irreparably damaged.

Furthermore, there needs to be an inflow of air to cool both the deforming disc and the parts in play.

As shown in figures 2 and 3, various pipes 16, 17 of the cooling oil and cooling air of the roller are respectively provided which allow to release oil and air onto the deforming disc 13 during its operating step.

Firstly, it is easy to note that the provision of these tubes 16, 17 presents difficulties in construction, difficulties in orienting the tubes as a function of the position of the rollers, and the need for there to be a certain amount of pressure to feed oil and air in the right amount onto the deforming discs and parts in play.

Secondly, the presence of all these tubes creates an obstacle to the vision of the working area, viz., to the vision of the contact between deforming discs and glass tube, preventing the operator from immediately detecting whether the operation is being carried out correctly.

US 5788733 refers to a glass tube shaping device which uses shaping rollers mounted on a rotary table.

DE 102017115397 relates to a hot forming tool for the production of glass containers, which serve as primary pharmaceutical packaging, and a device for producing glass containers.

The general aim of the present invention is to make a glass tube forming device adapted to be used in a forming machine of glass containers for medical use which is capable of solving the above-mentioned drawbacks of the prior art in an extremely simple, economical and particularly functional manner.

Another aim of the present invention is to make a glass tube forming device which is more compact with respect to those known and which does not require auxiliaries to be placed around it for its proper operation.

Another aim of the present invention is to make a glass tube forming device which, if possible, does not include pressurised air and oil tubes.

Last but not least, the aim of the present invention is to identify a glass tube forming device which is capable of ensuring that the oil and air are fed in the correct position at the rollers acting on the glass tube, especially when engaged thereon.

The above aims are achieved by a glass tube forming device adapted to be used in a forming machine of glass containers for medical use made according to independent claim 1 and the following sub-claims.

The structural and functional features of the present finding and its advantages compared to the prior art will be even clearer and more evident from an examination of the following disclosure, referring to the attached schematic drawings, which show an implementation example of the invention. In the drawings:
figure 1 shows a section of a glass tube forming device according to the prior art adapted to be used in a forming machine of glass tubes for medical use, taken along the line I-I of figure 2;
figures 2 and 3 show perspective views of the prior art forming device from both the front and the rear at a slight angle in order to better understand the specific features and interaction of parts, and figure 2a shows a schematic sectional detail of what is shown in figure 2;
figures 4 and 5 show perspective views of the forming device according to the present finding from both the front and the rear at a slight angle in order to better understand the specific features and interaction of parts, and figure 4a shows a schematic sectional detail of what is shown in figure 4;
figure 6 shows a section of the device according to the finding taken along the line VI-VI of figure 4;
figure 7 shows a section of the device according to the finding taken along the line in a plane parallel and close to that according to the line VI-VI of figure 4.

For the illustration of the drawings, use is made in the following description of identical numerals to indicate construction elements with the same function. Further, for illustration clarity, some numerical references may not be repeated in all the figures.

Indications such as "vertical" and "horizontal", "upper" and "lower" (in the absence of other indications) are to be read with reference to the assembly (or operating) conditions and with reference to the normal terminology used in current language, where "vertical" indicates a substantially parallel direction to that of the gravitational force vector "g" and horizontal to a direction perpendicular thereto.

With reference to the illustrative and non-limiting figures, an embodiment of a glass tube-forming device adapted to be used in a forming machine of glass tubes for medical use is shown.

Equal numbers are used in the disclosure for elements equal to the prior art forming device described above and illustrated in figures 1-3.

The forming device according to the present invention also comprises a parallelepiped base block 11 supporting a pair of arms 12. Such arms 12 are L-shaped arms and are arranged in the upper part of the base block 11.

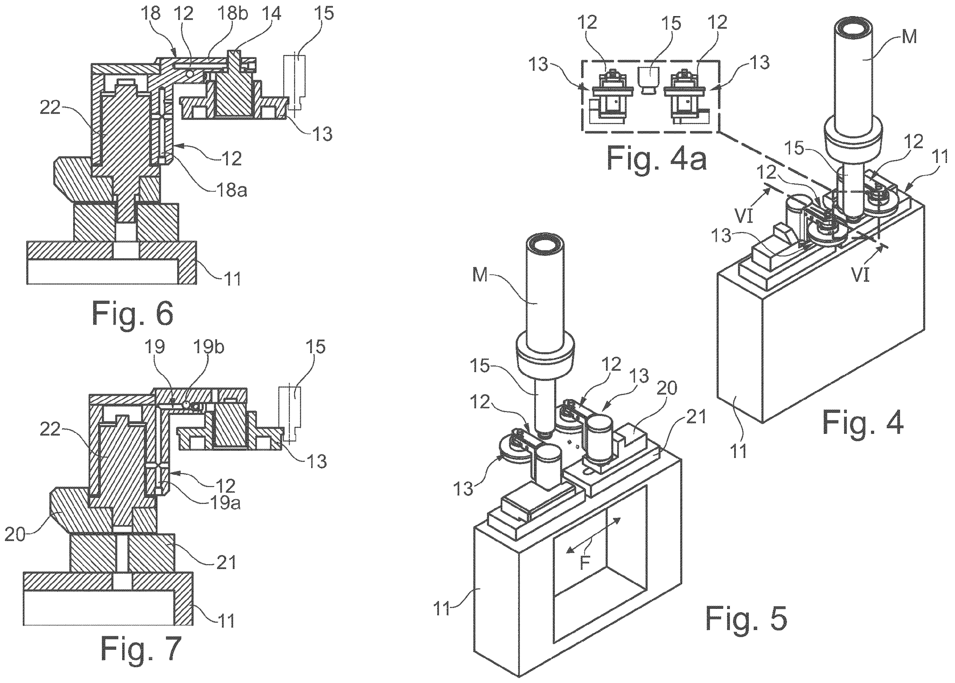

As can clearly be seen in figures 4 to 7, each arm 12 carries a flat roller or idle deforming disc 13 made of tool steel.

According to the present finding, the deforming disc 13 is arranged hanging from the free end of the arm 12 and is thus placed below the arm 12.

In this case, the deforming disc 13 is arranged idle on a shaft 14 which connects it to the L-shaped arm 12 and extends downwards from the arm 12.

According to the present finding, channels 18 through which lubrication and cooling oil flows are obtained inside the body of the arm 12 (figure 6). The channels 18 first extend into a first section 18a in the vertical part of arm 12 close to the base block 11. Secondly, such channels extend again in a second section 18b in the horizontal part of the arm 12 facing towards the exterior of the base block 11.

Such channels 18 end at and just above the deforming disc 13, which is lubricated by gravity from this an oil fall.

Further according to the present finding, as shown in the section of figure 7, cooling air ducts 19 are shown which also flow inside the body of the arm 12. These air ducts 19 are also identifiable in a first vertical section 19a, obtained in the vertical part of the arm 12 close to the base block 11, and in a second horizontal section 19b obtained precisely in the horizontal part of the arm 12 facing towards the exterior of the base block 11.

Here, too, the air exits close to the deforming disc 13, also affecting the glass tube being deformed when arranged between the two deforming discs 13 acting thereon to shape it to the desired form.

Figures 4 to 7 show how in reality the arms 12 bearing the deforming discs 13 facing downwards are arranged on the base block 11 with the interposition of a slide 20.

The slide 20 is translatable above the base block 11 on a sliding guide 21, integral with the base block 11 thanks to an electric or pneumatic actuator (partially shown in 22).

And this occurs for both arms 12 bearing the respective deforming discs 13 which can thereby be moved towards and away from each other according to the arrow F.

Therefore, the two arms 12 bring the respective deforming discs 13 to be arranged in engagement on and disengagement from the glass tube 15 to be shaped, respectively.

According to the finding, thanks to the arrangement of both the deforming discs 13 hanging downwards from the arms 12 and the provision of channels and ducts 18 and 19 for oil and air inside the arms 12, no obstruction is created to the vision of the deforming discs 13 when operating on the glass tube.

A device according to the present invention in which it is envisaged to "hang" the deforming disc 13 facing downwards directly from the arms, which have integrated oil and air ducts 18 and 19 obtained inside the arms 12, makes the device particularly simple and functional.

Having channels and ducts 18 and 19 for oil and air integrated inside the arms 12, with the deforming discs hanging makes the forming process freer and less congested.

The integrated lubrication and cooling in the support arm allows to exploit the gravity effect for oil and therefore much less pressure is required in the circuits. The system is less stressed with advantages for maintenance and upkeep of the machine, less machine downtime, etc.

The elimination of the known oil and air tubes associated externally with the base block allows to have possibilities of greater access and visibility of the glass tube formation process.

The aim mentioned in the preamble of the description is thus achieved.

The scope of protection of the present invention is defined by the appended claims.

## Claims

1. Glass tube forming device adapted to be used in a forming machine of glass containers for medical use comprising a parallelepiped base block (11) supporting a pair of arms (12) each bearing a flat roller or idle deforming disc (13), wherein
- said arms (12) are L-shaped arms and are arranged in the upper part of the base block (11),
- said two arms (12) can be moved closer to and farther away from each other (arrow F) to be arranged to respectively engage on and disengage from a glass tube (15) to be shaped;
**characterised in that** said deforming disc (13) is arranged hanging from the free end of each arm (12), placed idle underneath the arm (12),
each arm (12) carries channels (18) for oil and ducts (19) for cooling air therein, ending at and above each deforming disc (13).

2. Device according to claim 1, **characterised in that** said channels (18) extend in a first section (18a) in a vertical part of the arm (12) close to the base block (11) and in a second section (18b) in the horizontal part of the arm (12) facing towards the exterior of the base block 11.

3. Device according to claim 1 or 2, **characterised in that** said channels (18) lubricate said deforming disc (13) by gravity.

4. Device according to claim 1, **characterised in that** said cooling air ducts (19) comprise a first vertical section (19a), obtained in the vertical part of the arm (12) close to the base block (11), and a second horizontal section (19b) obtained in the horizontal part of the arm (12) facing towards the exterior of the base block (11).

5. Device according to one or more of the preceding claims, **characterised in that** said arms (12), bearing said deforming discs (13) facing downwards, are arranged on the base block 11 with the interposition of a slide (20), wherein said slide (20) is translatable above the base block (11) on a sliding guide (21), integral with the base block (11), by means of an electric or pneumatic actuator (22).

## Patentansprüche

1. Vorrichtung zur Bildung von Glasrohren, die zur Verwendung in einer Maschine zur Bildung von Glasbehältern für medizinische Zwecke geeignet ist, umfassend einen quaderförmigen Basisblock (11), der auf einem Paar von Armen (12) basiert, die jeweils eine flache Rolle oder eine leerlaufende Verformungsscheibe (13) tragen, wobei
- die Arme (12) L-förmig sind und im oberen Teil des Basisblocks (11) angeordnet sind,
- die beiden Arme (12) aufeinander zu und voneinander weg bewegt werden können (Pfeil F), um so angeordnet zu werden, dass sie in ein zu formendes Glasrohr (15) eingreifen bzw. sich von diesem lösen;
**dadurch gekennzeichnet, dass** die Verformungsscheibe (13) am freien Ende jedes Arms (12) hängend angeordnet ist, wobei sie sich frei unter dem Arm (12) befindet,
jeder Arm (12) Kanäle (18) für Öl und Kanäle (19) für Kühlluft in sich trägt, die an und über jeder Verformungsscheibe (13) enden.

2. Vorrichtung nach Anspruch 1, **dadurch gekennzeichnet, dass** sich die Kanäle (18) in einem ersten Abschnitt (18a) in einem vertikalen Teil des Arms (12) in der Nähe des Basisblocks (11) und in einem zweiten Abschnitt (18b) in dem horizontalen Teil des Arms (12) erstrecken, der dem Äußeren des Basisblocks 11 zugewandt ist.

3. Vorrichtung nach Anspruch 1 oder 2, **dadurch gekennzeichnet, dass** die Kanäle (18) die Verformungsscheibe (13) durch Schwerkraft schmieren.

4. Vorrichtung nach Anspruch 1, **dadurch gekennzeichnet, dass** die Kühlluftleitungen (19) einen ersten vertikalen Abschnitt (19a) umfassen, der im vertikalen Teil des Arms (12) in der Nähe des Basisblocks (11) erhalten wird, und einen zweiten horizontalen Abschnitt (19b), der im horizontalen Teil des Arms (12) erhalten wird, der zur Außenseite des Basisblocks (11) weist.

5. Vorrichtung nach einem oder mehreren der vorstehenden Ansprüche, **dadurch gekennzeichnet, dass** die Arme (12), die die nach unten gerichteten Verformungsscheiben (13) tragen, unter Zwischenschaltung eines Schlittens (20) auf der Basis 11 angeordnet sind, wobei der Schlitten (20) mittels eines elektrischen oder pneumatischen Aktuators (22) auf einer mit der Basis (11) fest verbundenen Gleitführung (21) über die Basis (11) verschiebbar ist.

## Revendications

1. Dispositif de formation de tube en verre adapté pour être utilisé dans une machine de formation de récipients en verre à usage médical comprenant un bloc de base parallélépipédique (11) supportant une paire de bras (12) portant chacun un rouleau plat ou un disque de déformation libre (13), dans lequel
- lesdits bras (12) sont des bras en forme de L et sont disposés dans la partie supérieure du bloc de base (11),
- lesdits deux bras (12) peuvent être rapprochés et éloignés l'un de l'autre (flèche F) pour être disposés de manière à pouvoir venir en prise et à se désengager respectivement d'un tube en verre (15) à façonner ;
**caractérisé en ce que** ledit disque de déformation (13) est disposé suspendu à l'extrémité libre de chaque bras (12), placé librement sous le bras (12),
chaque bras (12) porte des canaux (18) pour l'huile et des conduits (19) pour l'air de refroidissement à l'intérieur, se terminant au niveau et au-dessus de chaque disque de déformation (13).

2. Dispositif selon la revendication 1, **caractérisé en ce que** lesdits canaux (18) s'étendent dans une première section (18a) dans une partie verticale du bras (12) proche du bloc de base (11) et dans une seconde section (18b) dans la partie horizontale du bras (12) tournée vers l'extérieur du bloc de base 11.

3. Dispositif selon la revendication 1 ou 2, **caractérisé en ce que** lesdits canaux (18) lubrifient ledit disque de déformation (13) par gravité.

4. Dispositif selon la revendication 1, **caractérisé en ce que** lesdits conduits d'air de refroidissement (19) comprennent une première section verticale (19a), obtenue dans la partie verticale du bras (12) proche du bloc de base (11), et une seconde section horizontale (19b) obtenue dans
la partie horizontale du bras (12) tournée vers l'extérieur du bloc de base (11).

5. Dispositif selon une ou plusieurs des revendications précédentes, **caractérisé en ce que** lesdits bras (12), portant lesdits disques de déformation (13) tournés vers le bas, sont disposés sur le bloc de base 11 avec l'interposition d'un coulisseau (20), dans lequel ledit coulisseau (20) est translatable au-dessus du bloc de base (11) sur un guide coulissant (21), solidaire du bloc de base (11), au moyen d'un actionneur électrique ou pneumatique (22).
